# EUROPEAN PATENT APPLICATION

(11) **EP 4 578 840 A1**
(43) Date of publication of application: **02.07.2025**
(21) Application number: 24223340.1
(22) Date of filing: 27.12.2024
(51) Int. Cl.: C03C 17/34, B44C 1/17, C03C 17/00

(54) **METHOD FOR DECORATING A GLASS CONTAINER WITH DECALS**

(30) Priority: 27.12.2023 BE 202306066
(71) Applicant: Baobab Collection SA, 1300 Wavre (BE)
(72) Inventor: LAHY, Alain, 1300 Wavre (BE); AUGUSTO, Arnaud, 1300 Wavre (BE); DELEVAL, Eléonore, 1300 Wavre (BE); GARDIES, Jonathan, 1300 Wavre (BE)
(74) Representative: Brantsandpatents bv

(57) **Abstract**

The current invention relates to a method for decorating a glass container with decals, comprising the steps of: (i) cutting decals into a predetermined shape, (ii) positioning said decals onto a glass container, and applying pressure onto said decals, (iii) transferring said glass container to an oven, wherein said glass container is subjected to a thermal treatment, and (iv) removing said glass container from said oven.

## Description

### FIELD OF THE INVENTION

The present invention relates to a method for decorating a glass container with decals and decorated glass container.

### BACKGROUND

The decoration of glass containers, such as jars, is a significant aspect in various industries, notably in packaging and aesthetic presentation. Current methods of decorating these containers, especially with decals, present several challenges that limit their effectiveness and appeal.

One primary issue is the durability of the decorations. Existing decal application methods often result in decorations that are prone to wear, peeling, or damage under environmental stresses such as heat, moisture, or handling. This lack of durability not only affects the aesthetic quality of the product but also its long-term usability and appeal to consumers. Furthermore, the conventional methods struggle to ensure a seamless integration of the decal with the glass surface, often leading to visible imperfections such as air bubbles, wrinkles, or misalignments. These imperfections detract from the overall visual quality and can undermine the brand image the product seeks to convey.

US2111897, CN102320755, US3907974, US2004060895 disclose decorating methods.

Additionally, the current processes for applying decals to glass containers are often inefficient and environmentally taxing. They may require multiple steps that are time-consuming and labor-intensive, or involve the use of materials and processes that are not eco-friendly. For instance, certain adhesives or treatments used in conventional methods may release harmful emissions or leave residue that is challenging to dispose of or recycle. This inefficiency and environmental impact are increasingly significant drawbacks in an era where sustainability and operational efficiency are paramount.

Therefore, there exists a substantial need for an improved method of decorating glass containers with decals. Such a method should address the challenges of durability, aesthetic quality, process efficiency, and environmental impact, ultimately providing a superior solution for the decoration of glass containers.

### SUMMARY OF THE INVENTION

The invention relates to a method for decorating glass containers with decals according to claim 1. The method includes cutting decals into a predetermined shape, positioning the decals onto a glass container, and applying pressure onto the decals. The thermal treatment process involves heating the glass container in an oven at various temperature increase rates, maintaining an end temperature, and then cooling the container.

A preferred embodiment is provided in claim 8. Herein the oven includes ventilation hatches which are opened or closed depending on the temperature inside the oven. The method ensures efficient residue elimination, reduces potential thermal damage to the glass container.

The method of the invention results in decorated glass containers that are not prone to wear, peeling, or damage under environmental stresses. The method provides a clean, appealing decoration on the glass container, with precise application of decals, and improves the adhesion and durability of the decals onto the glass containers.

### DETAILED DESCRIPTION OF THE INVENTION

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
The term "glass container" refers to any vessel or receptacle made predominantly of glass, intended for holding various substances. This includes jars, bottles, flasks, etc., and can vary in size, shape, and capacity. The material properties of glass, such as transparency, chemical inertness, and aesthetic appeal, make it suitable for a wide range of applications. In a preferred embodiment, the glass container is a candle container.

The term "decals" describes decorative stickers or transfers, specifically designed for application on glass surfaces. Typically made from vinyl or a similar material, these decals are characterized by their ability to adhere to glass surfaces, their durability, and their capacity to carry detailed, often colorful designs. In an embodiment the decals are vinyl decals.

The term "oven" in this context is a thermal processing unit used for heating, baking, or drying substances or objects. It is capable of reaching and maintaining various set temperatures, and is essential for processes like baking, curing, or other heat treatments.

The expression "thermal treatment" refers to a process involving controlled heating and cooling cycles, used to alter the properties or appearance of materials, particularly for fixing decals onto glass containers.

The expression "temperature increase rate" refers to the speed at which temperature is raised within the oven, typically measured in degrees Celsius per hour (°C/h).

The expression "end temperature" refers to the final (highest) target temperature achieved in the thermal treatment process, after which the heating is stopped or maintained for a specified period.

The expression "ventilation hatches" refers to adjustable openings or vents in the oven, designed to control the internal atmosphere, particularly for the release or retention of gases or heat.

The expression "engraving" refers to the process of incising or carving a design onto the surface of an object, such as a glass container, for decorative purposes.

The expression "ambient temperature" refers to the temperature of the surrounding environment where the process is taking place, typically room temperature.

The expression "cutting" refers to the action of dividing or shaping material using a blade or similar tool, in this context, to prepare decals to a predetermined shape.

The expression "predetermined shape" refers to a specific form or outline decided upon before the cutting process, tailored to fit the glass container's surface area or design requirements.

The expression "positioning" refers to the act of placing or arranging something in a particular spot or configuration, here, the placement of decals on the glass container. The expression "pressure" refers to the physical force applied to an object's surface, in this case, to ensure the adhesion of decals to the glass container.

The expression "transferring" refers to the act of moving something from one place to another, here, the process of moving the decorated glass containers into an oven for thermal treatment.

The expression "heating" refers to the process of raising the temperature of an object or substance, in this context, part of the thermal treatment process in the oven.

The expression "cooling" refers to the process of lowering the temperature of an object or substance, in this case, part of the thermal treatment process to finalize the decal application.

The expression "distilled water" refers to water that has been purified through distillation, removing impurities and minerals, used here for hydrating decals.

"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

Furthermore, the terms first, second, third and the like in the description and in the claims, are used for distinguishing between similar elements and not necessarily for describing a sequential or chronological order, unless specified. It is to be understood that the terms so used are interchangeable under appropriate circumstances and that the embodiments of the invention described herein are capable of operation in other sequences than described or illustrated herein.

The recitation of numerical ranges by endpoints includes all numbers and fractions subsumed within that range, as well as the recited endpoints.

The expression "% by weight", "weight percent", "%wt" or "wt%", here and throughout the description unless otherwise defined, refers to the relative weight of the respective component based on the overall weight of the formulation.

Whereas the terms "one or more" or "at least one", such as one or more or at least one member(s) of a group of members, is clear *per se,* by means of further exemplification, the term encompasses *inter alia* a reference to any one of said members, or to any two or more of said members, such as, e.g., any ≥3, ≥4, ≥5, ≥6 or ≥7 etc. of said members, and up to all said members.

Unless otherwise defined, all terms used in disclosing the invention, including technical and scientific terms, have the meaning as commonly understood by one of ordinary skill in the art to which this invention belongs. By means of further guidance, definitions for the terms used in the description are included to better appreciate the teaching of the present invention. The terms or definitions used herein are provided solely to aid in the understanding of the invention.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

The invention pertains to a method for decorating a glass container with decals. In a preferred embodiment, the method comprises the steps of:
i. cutting decals into a predetermined shape,
ii. positioning these decals onto the glass container, and applying pressure onto the decals,
iii. transferring said glass container to an oven, wherein said glass container is subjected to a thermal treatment, and
iv. removing said glass container from the oven.

It is to be understood the steps as disclosed herein are performed sequentially.

This process ensures the decals are firmly attached to the glass surface, minimizing the risk of misalignment or air bubbles that could detract from the overall visual appeal of the product. The decals may be cut into a variety of shapes, providing versatility in the design and aesthetic presentation of the decorated glass containers.

In step (iii) the glass container with the decals are transferred to an oven, where they are subjected to a thermal treatment. The thermal treatment is a carefully calibrated process, involving a series of heating stage followed by a cooling stage.

The first stage (step a.) involves heating at a temperature increase rate of between 70 and 90°C/h. In a preferred embodiment of the invention, the method involves a thermal treatment process in which step (a) is characterized by reaching a temperature between 150 and 170°C. In this preferred embodiment, the temperature in step (a) is gradually increased at a speed of between 70 and 90°C/h until a temperature between 150 and 170°C is reached. It is during this temperature range that the decals begin to adhere to the glass containers. It is important to note that the temperature range of 150-170°C is not a strict limit but rather an optimal range that has been found to yield the best results in terms of decal adherence. In other embodiments, the temperature in step (a) may be slightly lower or higher than this range, depending on the specific type of decal and glass container being used. However, it is generally preferred to stay within this range to ensure the best results.

In a more preferred embodiment, the temperature reached in step (a) is between 155 and 165°C. This narrower temperature range provides an even better balance between the need for effective decal adherence and the need to prevent any potential damage to the glass containers due to excessive heat. In the most preferred embodiment, the temperature reached in step (a) is about 160°C. This specific temperature has been found to provide the optimal conditions for decal adherence, resulting in decorations that are not only visually appealing but also highly durable and resistant to environmental stresses.

In a preferred embodiment, step (a) has a duration of 1-3 hours, preferably 1.5-2 hours. In a more preferred embodiment, this could be for a duration of 1.5-2 hours at a temperature increase rate of between 70 and 90°C/h. Preferred is a duration of 1.5-2.5 hours at a temperature increase rate of between 75 and 85°C/h. This gradual increase in temperature helps to preserve the structural integrity of the decals, mitigating the risk of deformation or distortion due to rapid temperature changes.

In a further embodiment, the thermal treatment can be adjusted depending on the specific requirements of the decals and engraved designs. For example, the temperature increase speeds and end temperatures can be varied within a certain range to achieve the desired results. More preferably, the temperature increase speed in the first step (a) can be between 60°C/h and 100°C/h, more preferably between 70°C/h and 90°C/h, and most preferably around 80°C/h. The end temperature in the first step can be between 140°C and 180°C, more preferably between 150°C and 170°C, and most preferably around 160°C.

The second stage (step b.) of the thermal treatment involves heating at a temperature increase rate of between 110 and 130°C/h. In a preferred embodiment of the invention, the method involves a thermal treatment process in which step (b) is characterized by reaching a temperature between 390°C and 410°C. In this preferred embodiment, the temperature in step (b) is gradually increased at a speed of between 110 and 130°C/h until a temperature between 390°C and 410°C is reached.

In a further embodiment, the temperature increase speed in the first step (b) can be between 100°C/h and 140°C/h, more preferably between 110°C/h and 130°C/h, more preferably between 115 and 125°C/h, and most preferably around 120°C/h. The temperature reached in the second step (b) can be between 380°C and 420°C, more preferably between 390°C and 410°C, and most preferably around 400°C.

In a more preferred embodiment, the temperature reached in step (b) is between 395 and 405°C. This narrower temperature range provides an even better balance between the need for effective decal adherence and the need to prevent any potential damage to the glass containers due to excessive heat. In the most preferred embodiment, the temperature reached in step (b) is about 400°C.

In a preferred embodiment, step (b) has a duration of 1-3 hours, preferably 1.5-2.5 hours at a temperature increase rate of between 110 and 130°C/h. Preferred is a duration of 1.5-2.5 hours at a temperature increase rate of between 115 and 125°C/h. This further increase in temperature solidifies the decals onto the glass surface, enhancing their durability and resistance to environmental stresses such as heat, moisture, or handling.

In the third stage (step c.), the glass containers are heated at a temperature increase rate of between 190 and 210°C/h, where an end temperature is reached. In a further embodiment, the temperature increase speed in the first step (c) can be between 180°C/h and 220°C/h, more preferably between 190°C/h and 210°C/h, more preferably between 195 and 205°C/h, and most preferably around 200°C/h. The end temperature in the second step (b) can be between 580°C and 620°C, more preferably between 590°C and 610°C, and most preferably around 600°C.

In a preferred embodiment of the invention, the method involves a thermal treatment process in which step (c) is characterized by reaching a temperature between 590°C and 610°C. In this preferred embodiment, the temperature in step (c) is gradually increased at a speed of between 190 and 210°C/h until a temperature between 590°C and 610°C is reached.

In a more preferred embodiment, the temperature reached in step (c) is between 595 and 605°C. This narrower temperature range provides an even better balance between the need for effective decal adherence and the need to prevent any potential damage to the glass containers due to excessive heat. In the most preferred embodiment, the temperature reached in step (c) is about 600°C.

In a preferred embodiment, step (c) has a duration of 0.5-2 hours, preferably 0.5-1.5. In a more preferred embodiment, this could be for a duration of 0.5-2 hours at a temperature increase rate of between 190 and 210°C/h. Preferred is a duration of 0.5-1.5 hours at a temperature increase rate of between 195 and 205°C/h. This stage ensures the decals are fully integrated with the glass surface, further enhancing their durability and visual quality.

The final stage (step d) of the thermal treatment involves heating for 10-30 minutes at the end temperature, more preferably for 15-25 minutes. This stage solidifies the decals onto the glass surface, ensuring their long-term durability and aesthetic appeal. Following this, the glass containers are cooled by decreasing the temperature in the oven. This gradual cooling process further preserves the visual integrity of the decals, preventing any potential distortion or warping due to rapid temperature changes.

It is to be understood the steps as disclosed herein are performed sequentially.

The thermal treatment is an advantageous part of the method as it serves to ensure the durability and longevity of the decals and engraved designs on the glass containers. The thermal treatment is performed in a controlled manner, with specific temperature increase speeds and end temperatures to ensure the optimal integration of the decals and engraved designs into the glass surface.

Finally, the decorated glass containers are removed from the oven, ready for use or further processing. The result of this method is a decorated glass container that is not only aesthetically pleasing but also durable and resistant to environmental stresses. The decals maintain their original design despite the thermal treatment, reflecting the brand image and aesthetic intent of the product. This method thus provides a superior solution for the decoration of glass containers with decals, addressing the challenges of durability, aesthetic quality, process efficiency, and environmental impact.

In a preferred embodiment of the invention, the decals are submersed in distilled water after being cut into a predetermined shape and before application onto the glass container. This process of submersion in distilled water is advantageous to the overall method of decorating glass containers as it serves a dual purpose. Firstly, it ensures that the decals become more manageable, thus reducing the risk of tears or distortions during the subsequent application process. Secondly, it enhances the visual result once the decal is applied to the glass container, making it more accurate and appealing.

The submersion of the decals in distilled water can be carried out for varying durations, depending on the specific requirements of the decals and the glass container to be decorated. In a preferred embodiment of the invention, the decals are submerged in distilled water for a period of time ranging between 1 and 10 minutes. This immersion period is critical to the hydration process of the decals, which in turn significantly enhances their adhesiveness. The improved adhesiveness ensures that the decals firmly stick to the glass surfaces, thereby augmenting the durability of the decoration on the glass containers. This increased durability leads to a higher aesthetic value and longevity of the decorated glass containers, making them more appealing to consumers and more suitable for long-term use.

More specifically, in a more preferred embodiment, the hydration period for the decals is between 3 and 7 minutes. This specific timeframe has been found to provide an optimal balance between the hydration of the decals and the time efficiency of the decorating process. By submerging the decals within this timeframe, the decals achieve an advantageous level of hydration that maximizes their adhesiveness while keeping the overall process time-efficient. This leads to an improved method of decorating glass containers that is not only effective in terms of the resulting decoration quality but also efficient in terms of the time required.

Moreover, in the most preferred embodiment, the decals are submerged for a period of between 4 and 6 minutes, preferably about 5 minutes. This precise hydration period has been identified as the optimal time for achieving the highest level of adhesiveness in the decals. By adhering to this specific timeframe, the decals are ensured to be sufficiently hydrated, thus maximizing their stickability to the glass surfaces. This results in decorations that are not only highly durable and aesthetically pleasing, but also extremely resistant to environmental stresses such as heat, moisture, and handling. Furthermore, by optimizing the hydration process in this manner, the method also minimizes any potential waste of resources, making it a more sustainable and environmentally friendly option for decorating glass containers.

The distilled water used for submersion of the decals can be at room temperature (ambient temperature) or at a slightly elevated temperature. In some embodiments, the distilled water may be heated to a temperature ranging from 20 to 40°C, more preferably from 25 to 35°C, and most preferably about 30°C. The use of heated distilled water can further enhance the manageability of the decals and improve the overall visual result.

The decals are cut into a predetermined shape prior to submersion in distilled water. This shape is determined based on the design requirements of the glass container to be decorated. The cutting of the decals can be performed using various tools, such as scissors or a cutting machine. In some embodiments, the decals are cut into a shape that corresponds to the shape of the glass container, thereby ensuring a seamless integration of the decal with the glass surface.

The submersion not only enhances the manageability of the decals, thereby reducing the risk of tears or distortions during the application process, but also improves the visual result once the decal is applied to the glass container. Furthermore, this step can be easily and efficiently carried out, thereby contributing to the overall efficiency and effectiveness of the method.

In a preferred embodiment of the invention, the method of applying decals onto glass containers incorporates a step wherein air bubbles or air pockets are removed during the application of pressure onto the decals. This particular embodiment significantly enhances the adhesion of the decal to the glass container, thereby improving the overall durability of the decal. The longevity and aesthetic appeal of the decorated glass containers are thus enhanced as a result of this improved adhesion.

In a preferred embodiment of the invention, the application of pressure onto said decals is performed by manually pressing onto said decals. This embodiment involves the manual pressing of the decal onto the glass container, during which preferably air bubbles that may form are effectively removed. The removal of these air bubbles ensures a smooth and bubble-free application of the decal onto the glass container. This not only improves the adhesion of the decal to the glass container but also enhances the overall quality of the decal application. By ensuring a flawless, visually appealing finish, this embodiment significantly improves the aesthetic appeal of the decorated glass containers.

In one embodiment, the removal of the air bubbles is performed using a specific type of hand tool, such as a spatula or a squeegee.

The manual application of pressure provides the flexibility to adjust the placement of the decals as per the design requirements, which may vary based on the specific aesthetic goals of the decoration process. This flexibility is particularly beneficial when dealing with glass containers of varying shapes and sizes, as it ensures that the decals can be uniformly adhered to the container surface, regardless of its geometry.

The pressure applied during the application of the decal in this embodiment is also critical in ensuring effective adhesion of the decal to the glass container. In a more preferred embodiment, the pressure applied is between 5 and 10 N/cm2, more preferably between 6 and 9 N/cm2, and most preferably about 8 N/cm2. This pressure is sufficient to ensure effective adhesion of the decal to the glass container without causing damage to the decal or the glass container.

In a preferred embodiment of the present invention, the method further includes the step of engraving the glass container prior to the application of the thermal treatment. This additional process affords the opportunity to enhance the aesthetic appeal of the decorated glass containers. The engraved designs can provide a unique and customized look to each container, which can be particularly beneficial in industries where product differentiation and brand identity are of high importance. The engraving process can be performed using any suitable engraving device, and the designs can be drawn using a marker or any other suitable implement.

The engraving is performed before the thermal treatment to ensure that the engraved designs are well-integrated into the glass surface and are not compromised by the high temperatures used in the thermal treatment.

In a preferred embodiment of the invention, the method for decorating glass containers involves the use of an oven with ventilation hatches. The inclusion of ventilation hatches in the oven design is an advantageous feature that contributes to the effectiveness and efficiency of the overall decoration process.

The ventilation hatches play an advantageous role in the thermal treatment phase of the decoration process. In a preferred embodiment, as the oven heats up, these hatches remain open until the oven reaches a temperature of 400°C. This open-hatch state facilitates the elimination of plastic residues that may be present from the decals, thus ensuring a clean and uncontaminated environment for the thermal treatment.

The open position of the ventilation hatches during the initial stages of heating allows for the effective elimination of plastic residues. The heat generated in the oven causes the plastic residues to volatilize, and the open hatches provide an outlet for these volatiles to escape from the oven. This prevents the accumulation of plastic residues in the oven, ensuring a cleaner process and preventing potential contamination of the glass container during the thermal treatment. This aspect of the method is particularly advantageous as it enhances the overall efficiency of the decal application process and ensures the production of high-quality decorated glass containers.

In this embodiment, once the oven reaches the temperature of 400°C, the ventilation hatches are (automatically) closed. This closed position of the hatches at higher temperatures is advantageous in maintaining the necessary heat intensity for the final stages of the thermal treatment. The closed hatches prevent heat loss, thereby ensuring that the required high temperatures are sustained for the necessary duration. This is particularly important for the final baking stage of the process, where high temperatures are needed to ensure the complete curing and setting of the decal onto the glass surface. The closed hatches also contribute to a more energy-efficient process by reducing heat loss and thus minimizing energy consumption.

In a more preferred embodiment, the transition of the ventilation hatches from open to closed position occurs at a temperature range between 390°C and 410°C, more preferably between 395°C and 405°C, and most preferably at exactly 400°C.

During the cooling down process in step (e), when the oven temperature drops under 200°C, the ventilation hatches are preferably opened. Preferably the ventilation hatches are opened gradually. This gradual opening allows for a controlled decrease in temperature, preventing any sudden thermal shocks that could potentially damage the decals or the glass containers.

The opening of the ventilation hatches at a temperature below 200°C enables a more rapid and controlled cooling of the decorated glass containers. This is significant as the rate and manner of cooling can directly impact the quality and durability of the decal application. By allowing for a quicker cooling process, the proposed method can significantly improve production efficiency. Less time is required for each batch of decorated containers to cool and be ready for the next stage of the process or for final packaging. This can result in a higher throughput of decorated glass containers, which is a notable advantage in high-demand or time-sensitive scenarios.

Furthermore, this approach to cooling can also lead to energy savings. By reducing the time that the oven needs to be in operation for each batch, the overall energy consumption of the decal application process can be decreased. This is not only cost-effective but also more environmentally friendly, aligning with the increasing emphasis on sustainability in manufacturing and production practices.

In a preferred embodiment of the invention, the end temperature during the thermal treatment process is between 550 and 650°C. This range has been found to be optimal for the durability and longevity of the decal decorations on the glass containers. The decals, when subjected to this specific temperature range, exhibit improved resistance to environmental stresses such as heat, moisture, and handling. The designs remain intact and attractive, enhancing the aesthetic appeal and usability of the decorated glass containers over extended periods of time.

In a more preferred embodiment, the end temperature is within a narrower range of 575 to 625°C, preferably between 590 and 610°C. In a most preferred embodiment, the end temperature is maintained at approximately 600°C. This specific temperature has been found to deliver the optimal results in terms of decal durability and longevity. The decals treated at this temperature exhibit the highest resistance to environmental stresses, ensuring that the designs remain intact and attractive for the longest possible duration. This temperature also minimizes any potential risk of damage to the glass containers, making it the most advantageous for the decal application method.

In a preferred embodiment of the invention, the thermal treatment process begins at an ambient temperature, preferably within the range of 20 to 25°C, preferably between 20 and 23°C.

The use of ambient temperature as the starting point for the thermal treatment process enhances the efficiency of the method. It eliminates the need for additional energy to preheat the oven, thereby reducing the overall energy consumption of the process. This contributes to the environmental sustainability of the method, aligning it with contemporary standards of eco-friendly operations. Furthermore, by starting at a controlled temperature range, the process can be standardized across different production environments, ensuring consistent quality of the decorated glass containers.

In a specific embodiment of the invention, the method comprises the steps of:
i. cutting decals into a predetermined shape,
ii. positioning said decals onto a glass container, and applying pressure onto said decals,
iii. transferring said glass container to an oven, wherein said glass container is subjected to a thermal treatment, wherein said thermal treatment comprises the steps of:
   a. heating for 1-3 hours at a temperature increase rate of between 70 and 90°C/h;
   b. heating for 1-3 hours at a temperature increase rate of between 110 and 130°C/h;
   c. heating for 0.5-2 hours at a temperature increase rate of between 190 and 210°C/h, wherein an end temperature is reached;
   d. heating for 10-30 minutes at said end temperature;
   e. cooling said glass container by decreasing the temperature in the oven thereby obtaining decorated glass container,
iv. removing said glass container from said oven.

In a specific embodiment of the invention, the method comprises the steps of:
i. cutting decals into a predetermined shape,
ii. positioning said decals onto a glass container, and applying pressure onto said decals,
iii. transferring said glass container to an oven, wherein said glass container is subjected to a thermal treatment, wherein said thermal treatment comprises the steps of:
   a. heating at a temperature increase rate of between 70 and 90°C/h until a temperature of between 150 and 170°C is reached;
   b. heating at a temperature increase rate of between 110 and 130°C/h until a temperature of between 390 and 410°C is reached;
   c. heating at a temperature increase rate of between 190 and 210°C/h, wherein an end temperature is reached, wherein said end temperature lies between 590 and 610°C;
   d. heating for 10-30 minutes at said end temperature;
   e. cooling said glass container by decreasing the temperature in the oven thereby obtaining decorated glass container,
iv. removing said glass container from said oven.

In a preferred embodiment, the invention pertains further to a glass container decorated with decals, which is preferably achieved through a method as described in the previous embodiments. The method ensures a high-quality, appealing decoration on the glass container, primarily due to the controlled heating process that preserves the integrity and design of the decals. This process, therefore, significantly enhances the aesthetic value of the glass container, making it more appealing to consumers and more suitable for various applications.

The method involves a carefully calibrated thermal treatment process, which is designed to ensure optimal adhesion of the decals to the glass container, while also preserving the quality and design of the decals.

The glass container decorated with decals obtained from this method presents a superior solution to the challenges of durability, aesthetic quality, process efficiency, and environmental impact associated with the decoration of glass containers. The method ensures a seamless integration of the decals with the glass surface, resulting in a visually appealing product that can withstand various environmental stresses. Furthermore, the method is efficient and environmentally friendly, making it a preferred choice for industries looking to enhance their operational efficiency and sustainability.

### EXAMPLES AND DESCRIPTION OF FIGURES

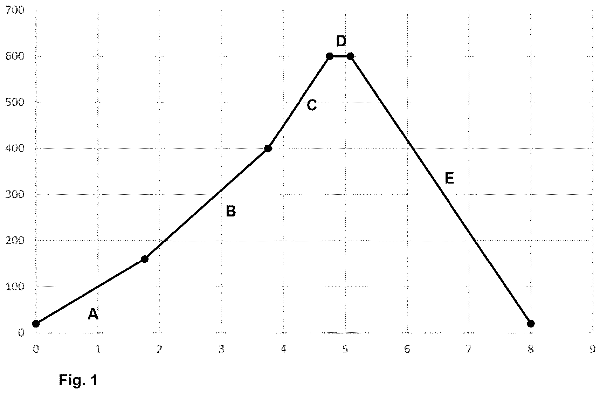

Example 1 relates to a method according to an embodiment of the invention. Decals were cut and applied to glass candle containers. Afterwards a thermal treatment was carried out, from which the temperature profile (temperature (°C)-time (h)) is given in figure 1.

The thermal treatment is performed in four steps, with each step having a specific temperature increase speed and end temperature. The first step (A) involves a temperature increase speed of 80°C/h to reach a preferred temperature of 160°C. The second step (B) involves a temperature increase speed of 120°C/h to reach a preferred temperature of 400°C. The third step (C) involves a temperature increase speed of 200°C/h to reach a preferred end temperature of 600°C. The fourth and final step (D) involves maintaining the end temperature for 20 minutes. Afterwards the oven is cooled down (E).

The resulting decorated containers do not show any signs of pealing and the decals are adhered optimally to the glass containers. This controlled heating process preserved the quality of the decal and enhanced its durability.

## Claims

1. A method for decorating a glass container with decals, comprising the sequential steps of:
i. cutting decals into a predetermined shape,
ii. positioning said decals onto a glass container, and applying pressure onto said decals,
iii. transferring said glass container to an oven, wherein said glass container is subjected to a thermal treatment, wherein said thermal treatment comprises the sequential steps of:
a. heating at a temperature increase rate of between 70 and 90°C/h until a temperature of between 150 and 170°C is reached;
b. heating at a temperature increase rate of between 110 and 130°C/h until a temperature of between 390 and 410°C is reached;
c. heating at a temperature increase rate of between 190 and 210°C/h, wherein an end temperature is reached, wherein said end temperature lies between 590 and 610°C;
d. heating for 10-30 minutes at said end temperature;
e. cooling said glass container by decreasing the temperature in the oven thereby obtaining decorated glass container,
iv. removing said glass container from said oven.

2. Method according to claim 1, wherein the decals are submersed in distilled water after cutting them into a predetermined shape.

3. Method according to claim 2, wherein the decal are submersed for a period of between 1 and 10 minutes, preferably between 3 and 7 minutes.

4. Method according to any of the preceding claims, wherein air pockets are removed during the application of pressure onto the decals.

5. Method according to any of the preceding claims, wherein said glass container is engraved before applying said thermal treatment.

6. Method according to any of the preceding claims, wherein the application of pressure onto said decals is performed by manually pressing onto said decals.

7. Method according to any of the preceding claims, wherein said oven comprises ventilation hatches.

8. Method according to claim 7, wherein said ventilation hatches are in an open position as long as the temperature in said oven is below 400°C, and wherein said ventilation hatches are in a closed position when the temperature in said oven is above 400°C.

9. Method according to claim 8, wherein said ventilation hatches are opened during cooling, when the temperature in said oven is below 200°C.

10. Method according to any of the preceding claims, wherein step (a) has a duration of between 1 and 3 hours.

11. Method according to any of the preceding claims, wherein step (b) has a duration of between 1 and 3 hours.

12. Method according to any of the preceding claims, wherein step (c) has a duration of between 0.5 and 2 hours.

13. Method according to any of the preceding claims, wherein the temperature at the beginning of said thermal treatment is ambient temperature, preferably between 20 and 25°C.
